# EUROPEAN PATENT APPLICATION

(11) **EP 4 492 402 A1**
(43) Date of publication of application: **15.01.2025**
(21) Application number: 23767198.7
(22) Date of filing: 10.03.2023
(51) Int. Cl.: G21C 15/18, G21C 15/02

(54) **SMALL NUCLEAR REACTOR COOLING SYSTEM AND COOLING METHOD**

(30) Priority: 10.03.2022 KR 20220029773
(71) Applicant: Korea Hydro & Nuclear Power Co., Ltd, Gyeongju-si, Gyeongsangbuk-do 38120 (KR)
(72) Inventor: KIM, Mun Soo, Daejeon 34049 (KR); KIM, Dae Hun, Daejeon 34145 (KR)
(74) Representative: Taruttis, Tilman
(86) International application number: PCT/KR2023/003288
(87) International publication number: WO 2023/172097

(57) **Abstract**

There are provided a small nuclear reactor cooling system and cooling method. The small nuclear reactor cooling system includes: a cooling unit in which a small nuclear reactor is positioned and which performs cooling processing corresponding to a severe accident in the cooling system when the severe accident occurs in the small nuclear reactor, wherein the cooling unit provides a first cooling fluid so as to perform the cooling processing in response to heat generated by the severe accident.

## Description

### [Technical Field]

The present disclosure relates to a small nuclear reactor cooling system and cooling method.

### [Background Art]

Currently, a small modular reactor (SMR) equipped with several passive safety facilities to aim to innovatively improve safety has been researched and developed. A NuScale that is currently considered the most advanced SMR type has an output of 600 MW by modularizing nuclear reactors of 50 MW. In addition, the NuScale may be provided in the form in which a containment building (e.g., in the form of a steel container, etc.) including a nuclear reactor is contained in a great cooling water tank in order to secure passive safety in the event of an accident. In such a structure, it is difficult to periodically manage the cooling water tank, and a lot of effort is required to manage water quality of cooling water of the cooling water tank. Furthermore, during periodic planned preventive maintenance, all water should be discharged, and a secondary facility for storing such water is required. In this case, a management system becomes complicated. Moreover, considering the occurrence probability of a severe accident, cost-effectiveness of the NuScale as a preparedness facility is very low.

### [Disclosure]

### [Technical Problem]

Aspects of the present disclosure are to secure soundness of a small nuclear reactor and a nuclear reactor building including the small nuclear reactor before cooling of a core melt begins in earnest by starting passive immediate cooling by a cooling means.

Aspects of the present disclosure are also to perform nuclear reactor cooling that does not require water quality management for an external tank (e.g. a water tank, etc.).

Aspects of the present disclosure are also to perform heat exchange with water in a containment compartment of a small nuclear reactor by a heat transfer device connected to such a tank and perform nuclear reactor cooling capable of long-term (e.g., 72 hours or more, which is an operator action standard time) passive cooling of the nuclear reactor without separate intervention of an operator.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

### [Technical Solution]

According to an aspect of the present disclosure, there is provided a small nuclear reactor cooling system including: a cooling unit in which a small nuclear reactor is positioned and which performs cooling processing corresponding to a severe accident in the cooling system when the severe accident occurs in the small nuclear reactor, wherein the cooling unit provides a first cooling fluid so as to perform the cooling processing in response to heat generated by the severe acci dent.

The cooling unit may include a nuclear reactor receiving body and a passive cooling body, the nuclear reactor receiving body may include a bottom panel portion forming a bottom, one side outer panel portion provided on one side of the bottom panel portion, and the other side outer panel portion provided on the other side of the bottom panel portion, and the other side outer panel portion may be positioned around the small nuclear reactor between the one side outer panel portion and the other side outer panel portion and provide the first cooling fluid to the small nuclear reactor based on the heat generated by the severe accident.

The nuclear reactor receiving body may further include a plurality of inner panel portions provided between the one side outer panel portion and the other side outer panel portion, the small nuclear reactors may be positioned between the one side outer panel portion and the other side outer panel portion, and the inner panel portions, respectively, and the passive cooling body may be positioned on at least a portion of a peripheral portion of each of the small nuclear reactors and allow the first cooling fluid to be provided.

The passive cooling body may include: a first passive cooling body provided on an inner side surface of the one side outer panel portion; a second passive cooling body provided on an inner side surface of the other side outer panel portion; third passive cooling bodies provided on at least portions of facing surfaces of the inner panel portions; a fourth passive cooling body provided on at least a portion of a facing surface of the inner panel portion facing the first passive cooling body of the first outer panel portion; and a fifth passive cooling body provided on at least a portion of a facing surface of the inner panel portion facing the second passive cooling body of the inner panel portion.

The cooling unit may further include an internal heat transfer body provided so that one side thereof is in contact with the passive cooling body and the other side thereof is in contact with the small nuclear reactor to link the passive cooling body and the small nuclear reactor with each other, the internal heat transfer body may transfer the heat generated by the severe accident of the small nuclear reactor to the passive cooling body, and the passive cooling body may receive the first cooling fluid therein and discharge the first cooling fluid to the outside in response to the heat transfer of the internal heat transfer body.

The internal heat transfer body may include any one of a needle-type structure, a bar-type structure, and a panel-type structure.

At least one of the first passive cooling body to the fifth passive cooling body may be partitioned into a plurality of portions, and the first cooling fluid may be contained in each of the plurality of portions.

The passive cooling body may further include a sixth passive cooling body provided on the bottom panel portion.

The small nuclear reactor cooling system may further include: an external cooling unit linked with the cooling unit; and an external heat transfer body linking the cooling unit and the external cooling unit with each other, wherein the external cooling unit may include: an external receiving body filled with a second cooling fluid; and a multilayer cooling body having a hollow structure, immersed in the second cooling fluid in the external receiving body, and bent in multiple layers.

The external cooling unit may further include a chimney-type cooling body linked with the multilayer cooling body to allow passive cooling processing based on a chimney effect to be performed on the small nuclear reactor.

The chimney-type cooling body may include: an immersion-type cooling body having a hollow structure and immersed in the second cooling fluid in the external receiving body; a first exposure-type cooling body having a hollow structure, connected to the immersion-type cooling body, and immersed in the second cooling fluid in the external receiving body, a portion of the first exposure-type cooling body in a height direction being exposed to the outside; and a second exposure-type cooling body having a hollow structure, communicating with the first exposure-type cooling body through the immersion-type cooling body, and immersed in the second cooling fluid in the external receiving body, a portion of the second exposure-type cooling body in the height direction being exposed to the outside at a higher level than the first exposure-type cooling body.

The external heat transfer body may link the first cooling fluid and the second cooling fluid with each other through the multilayer cooling body, and the external cooling unit may allow the passive cooling processing to be performed through a natural evaporation method in response to the heat generated by the small nuclear reactor.

The external cooling unit may prevent a water level of the first cooling fluid of the cooling unit from being lowered due to the generated heat through heat exchange with the cooling unit, the second cooling fluid of the external receiving body may allow the heat exchange to continuously occur without separate handling for a predetermined cycle, and the predetermined cycle may include a cycle of at least 72 hours.

The external cooling unit may be provided with the second cooling fluid so as to correspond to a total heat equivalent generated by the small nuclear reactor or the cooling unit.

According to another aspect of the present disclosure, there is provided a small nuclear reactor cooling method including: positioning a small nuclear reactor in a cooling system; and performing cooling processing corresponding to a severe accident in the cooling system when the severe accident occurs in the small nuclear reactor, wherein the small nuclear reactor is positioned in the cooling system, and the cooling system includes a cooling unit providing a first cooling fluid in response to heat generated by the severe accident.

### [Advantageous Effects]

The small nuclear reactor cooling system and cooling method according to the present disclosure as described above have one or more of the following effects.

The present disclosure may secure soundness of a small nuclear reactor and a nuclear reactor building including the small nuclear reactor before cooling of a core melt begins in earnest by starting passive immediate cooling by a cooling means.

In addition, the present disclosure may perform nuclear reactor cooling that does not require water quality management for an external tank (e.g. a water tank, etc.).

Further, the present disclosure may perform heat exchange with water in a containment compartment of a small nuclear reactor by a heat transfer device connected to such a tank and perform nuclear reactor cooling capable of long-term (e.g., 72 hours or more, which is an operator action standard time) passive cooling of the nuclear reactor without separate intervention of an operator.

### [Description of Drawings]

FIG. 1 is a block diagram illustrating a configuration of a small nuclear reactor cooling system according to an embodiment of the present disclosure;
FIG. 2 is a block diagram illustrating, in detail, the configuration of the small nuclear reactor cooling system of FIG. 1;
FIGS. 3 to 5 are configuration diagrams illustrating the configuration of the small nuclear reactor cooling system of FIG. 1;
FIGS. 6 and 7 are configuration diagrams illustrating an overall configuration of the small nuclear reactor cooling system of FIG. 1; and
FIG. 8 is a flowchart sequentially illustrating a small nuclear reactor cooling method according to an embodiment of the present disclosure.

### [Mode for Invention]

Hereinafter, embodiments of the present disclosure will be described in detail with reference to the accompanying drawings. Advantages and features of the present disclosure and embodiments of the present disclosure will hereinafter be described in detail with reference to the accompanying drawings. Advantages and features of the present disclosure and methods for accomplishing these advantages and features will become apparent from embodiments to be described later in detail with reference to the accompanying drawings. However, the present disclosure is not limited to embodiments to be disclosed below, but may be implemented in various different forms, these embodiments will be provided only in order to make the present disclosure complete and allow one of ordinary skill in the art to completely recognize the scope of the present disclosure, and the present disclosure will be defined by the scope of the claims. Throughout the specification, the same components will be denoted by the same reference numerals.

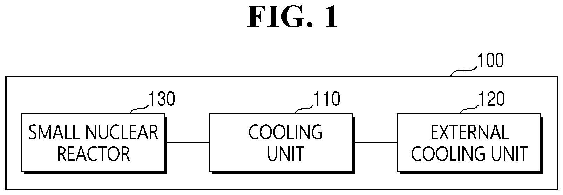

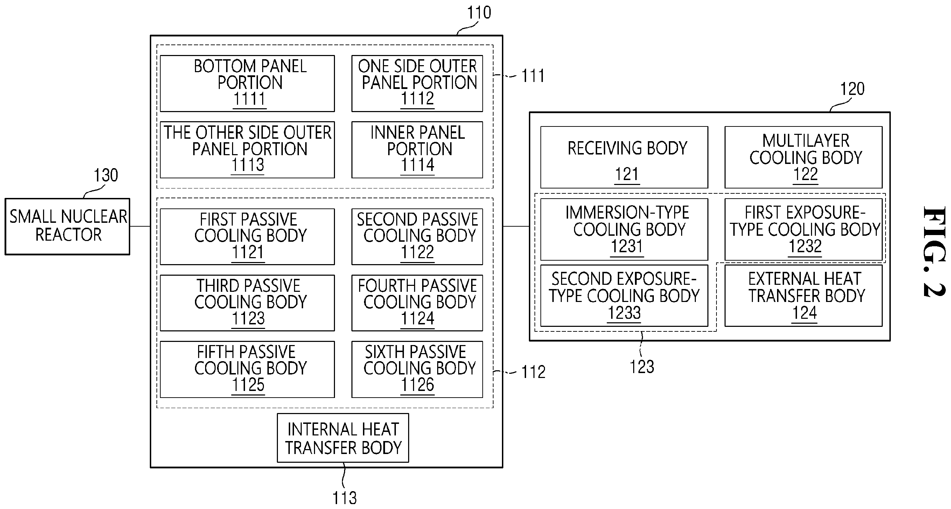

Referring to FIG. 1, a small nuclear reactor cooling system 100 according to an embodiment of the present disclosure includes a small nuclear reactor 130, a cooling unit 110, and an external cooling unit 120. Referring to FIG. 2, the cooling unit 110 of the small nuclear reactor cooling system includes a nuclear reactor receiving body 111 and a passive cooling body 112.

Here, the nuclear reactor receiving body 111 includes a bottom panel portion 1111, one side outer panel portion 1112, the other side outer panel portion 1113, and an inner panel portion 1114. The passive cooling body 112 includes a first passive cooling body 112, a second passive cooling body 112, a third passive cooling body 112, a fourth passive cooling body 112, and a fifth passive cooling body 112.

The external cooling unit 120 includes a receiving body 121, a multilayer cooling body 122, a chimney-type cooling body 123, and an external heat transfer body 124. The chimney-type cooling body 123 includes an immersion-type cooling body 1231, a first exposure-type cooling body 1232, and a second exposure-type cooling body 1233.

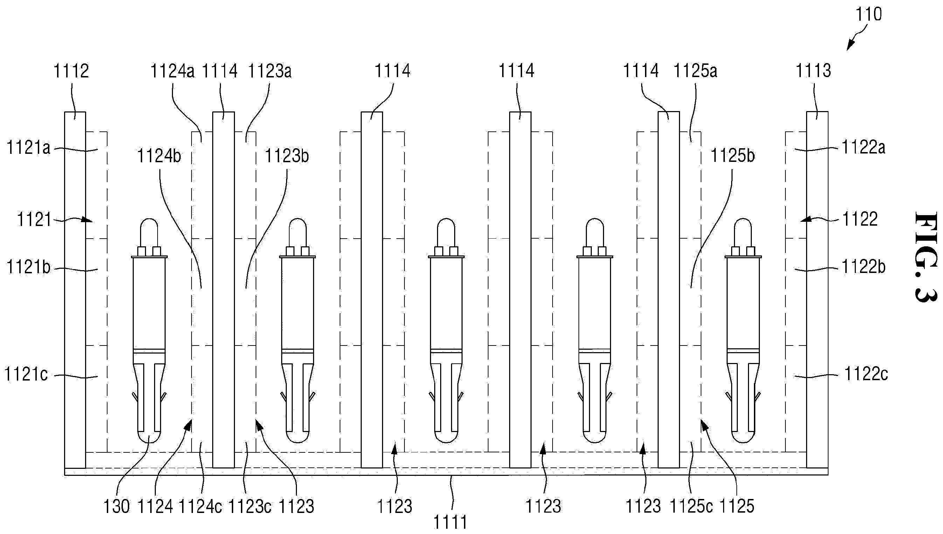

Referring to FIGS. 3 to 5, the small nuclear reactor 130 is positioned in the cooling unit 110 of the cooling system 100. When a severe accident occurs in the small nuclear reactor 130, the cooling unit 110 performs cooling processing corresponding to the severe accident in the cooling system 100.

The cooling unit 110 provides a first cooling fluid W1 so as to perform the cooling processing in response to heat generated by the severe accident. The bottom panel portion 1111 of the nuclear reactor receiving body 111 of the cooling system 100 forms a bottom.

Here, the one side outer panel portion 1112 is provided on one side of the bottom panel portion 1111 to form a wall. The other side outer panel portion 1113 is provided on the other side of the bottom panel portion 1111 to form a wall.

The cooling unit 110 of the cooling system 100 is positioned around the small nuclear reactor 130 between the one side outer panel portion 1112 and the other side outer panel portion 1113.

In this case, the cooling unit 110 is provided to provide the first cooling fluid W1 to the small nuclear reactor 130 based on the heat generated by the severe accident. The inner panel portions 1114 of the nuclear reactor receiving body 111 form a single wall or a plurality of walls between the one side outer panel portion 1112 and the other side outer panel portion 1113.

The small nuclear reactors 130 are positioned between the one side outer panel portion 1112 and the other side outer panel portion 1113, and the inner panel portions 1114, respectively. The passive cooling body 112 is positioned on at least a portion of a peripheral portion of each of the small nuclear reactors 130 and allows the first cooling fluid W1 to be provided.

In addition, the first passive cooling body 112 of the passive cooling body 112 is provided on an inner side surface of the one side outer panel portion 1112. The second passive cooling body 112 of the passive cooling body 112 is provided on an inner side surface of the other side outer panel portion 1113.

The third passive cooling bodies 112 of the passive cooling body 112 are provided on at least portions of facing surfaces of the inner panel portions 1114. The fourth passive cooling body 1124 is provided on at least a portion of a facing surface of the inner panel portion 1114 facing the first passive cooling body 1121 of the first outer panel portion 1112.

The fifth passive cooling body 1125 of the passive cooling body 112 is provided on at least a portion of a facing surface of the inner panel portion 1114 facing the second passive cooling body 1122 of the inner panel portion 1114.

In addition, the first passive cooling body 112 to the sixth passive cooling body 112 of the passive cooling body 112 are classified into manual passive cooling bodies and automatic passive cooling bodies in responding to the heat generated by the severe accident.

The manual passive cooling bodies are based on physical force by an actuator-based trigger means (not illustrated) for responding to the generated heat. For example, the first cooling fluid W1 is provided from the inside of the first passive cooling body 112 to the sixth passive cooling body 112 by the actuator-based trigger means (see FIG. 3).

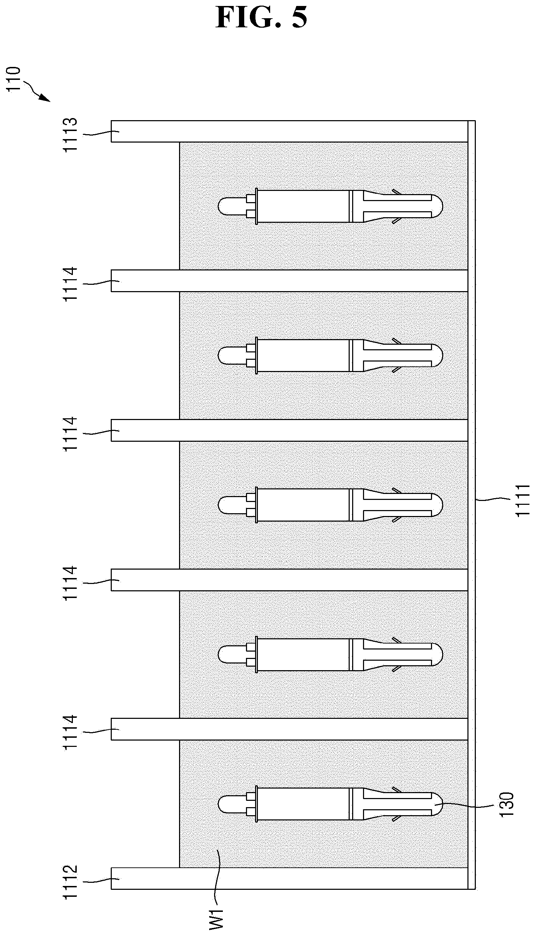

Here, the actuator-based trigger means is provided to the first passive cooling body 112 to the sixth passive cooling body 112 so that a pressing method, a stabbing method, a cutting method, or the like, is possible. Accordingly, the first passive cooling body 112 to the sixth passive cooling body 112 discharges the first cooling fluid W1 to the outside (see FIG. 5).

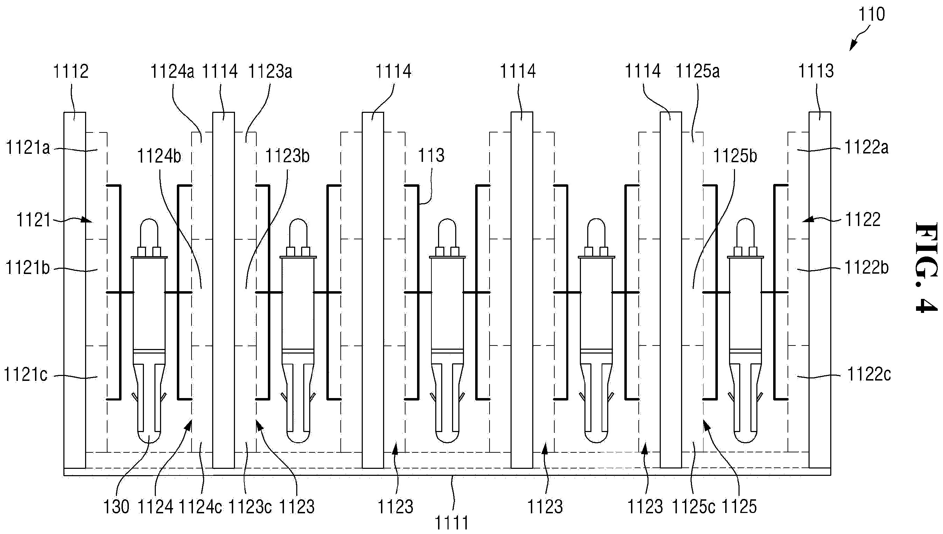

The manual passive cooling bodies may be driven by an operator or a control device. In the case of the automatic manual passive cooling bodies, the internal heat transfer bodies 113 are provided between the small nuclear reactors 130 and the first passive cooling body 112 to the sixth passive cooling body 112 to be in direct contact with the small nuclear reactors 130 and the first passive cooling body 112 to the sixth passive cooling body 112 (see FIG. 4).

Through such direct contact, the heat generated by the severe accident is transferred to the first passive cooling body 112 to the sixth passive cooling body 112. The first passive cooling body 112 to the sixth passive cooling body 112 are at least partially melted by the heat to discharge the first cooling fluid W1 positioned inside the first passive cooling body 112 to the sixth passive cooling body 112 to the outside (see FIG. 5).

The internal heat transfer body 113 of the cooling unit 110 is provided so that one side thereof is in contact with the passive cooling body 112 and the other side thereof is in contact with the small nuclear reactor 130, to link the passive cooling body 112 and the small nuclear reactor 130 with each other.

In addition, the internal heat transfer body 113 transfers the heat generated by the severe accident of the small nuclear reactor 130 to the passive cooling body 112. The passive cooling body 112 receives the first cooling fluid W1 therein.

The passive cooling body 112 discharges the first cooling fluid W1 to the outside in response to the heat transfer of the internal heat transfer body 113. The internal heat transfer body 113 includes a needle-type structure, a bar-type structure, a panel-type structure, or the like.

In this case, at least one of the first passive cooling body 1121 to the fifth passive cooling body 1125 is partitioned into a plurality of portions, and the first cooling fluid W1 is contained in each of the plurality of portions. The sixth passive cooling body 1126 of the passive cooling body 112 is provided on the bottom panel portion 1111.

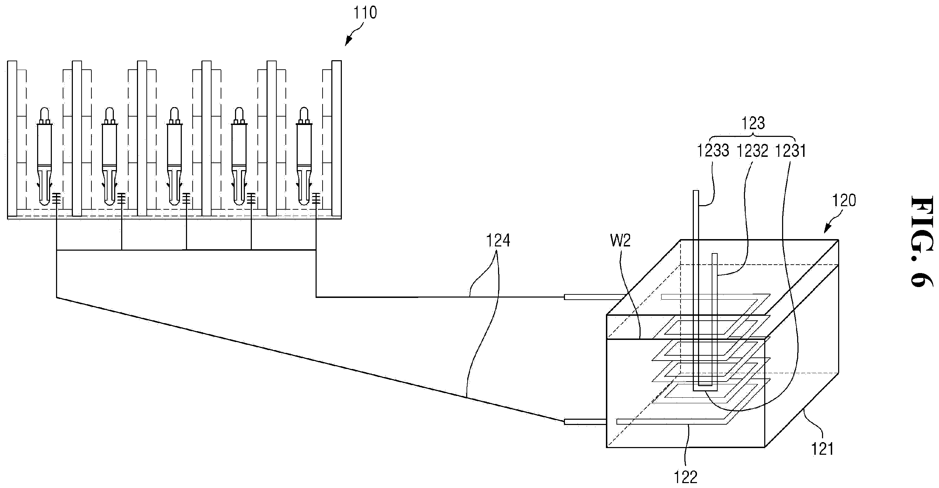

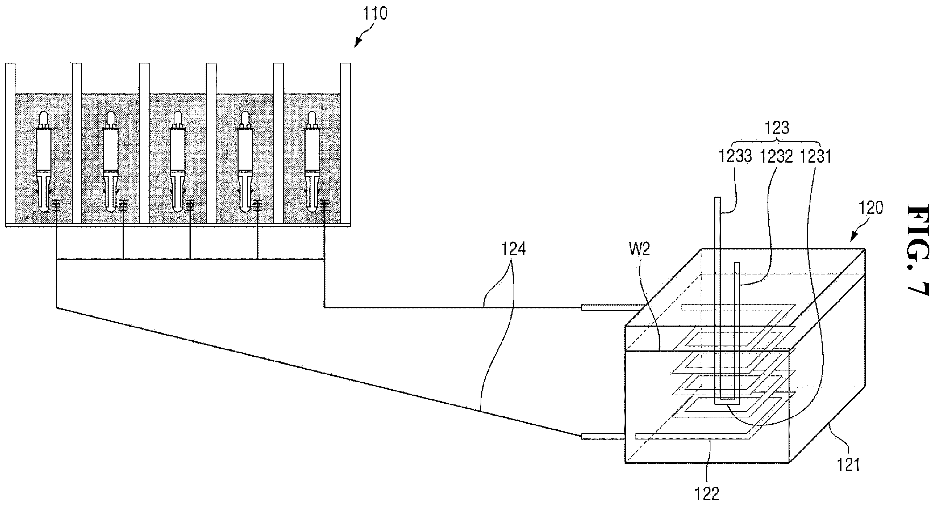

Referring to FIGS. 6 and 7, the external cooling unit 120 of the cooling system 100 is linked with the cooling unit 110. The external heat transfer body 124 of the cooling system 100 links the cooling unit 110 and the external cooling unit 120 with each other.

The external receiving body 121 of the external cooling unit 120 is filled with a second cooling fluid W2. The multilayer cooling body 122 of the external cooling unit 120 has a hollow structure.

Such an external receiving body 121 of the external cooling unit 120 is immersed in the second cooling fluid W2 in the external receiving body 121 and bent in multiple layers.

The chimney-type cooling body 123 of the external cooling unit 120 is linked with the multilayer cooling body 122 to allow passive cooling processing based on a chimney effect to be performed on the small nuclear reactor 130.

In addition, the immersion-type cooling body 1231 of the chimney-type cooling body 123 has a hollow structure, and is immersed in the second cooling fluid W2 in the external receiving body 121. The first exposure-type cooling body 1232 of the chimney-shaped cooling body 123 has a hollow structure.

The immersion-type cooling body 1231 of the chimney-type cooling body 123 is connected to the immersion-type cooling body 1231. The first exposure-type cooling body 1232 of the external receiving body 121 is immersed in the second cooling fluid W2, and a portion of the first exposure-type cooling body 1232 in a height direction is exposed to the outside.

Here, the second exposure-type cooling body 1233 of the chimney-type cooling body 123 has a hollow structure, and communicates with the first exposure-type cooling body 1232 through the immersion-type cooling body 1231.

Meanwhile, the second exposure-type cooling body 1233 is immersed in the second cooling fluid W2 in the external receiving body 121, and a portion of the second exposure-type cooling body 1233 in the height direction is exposed to the outside at a higher level than the first exposure-type cooling body 1232.

The external heat transfer body 124 links the first cooling fluid W1 and the second cooling fluid W2 with each other through the multilayer cooling body 122. The external cooling unit 120 allows the passive cooling processing to be performed through a natural evaporation method in response to the heat generated by the small nuclear reactor 130.

In addition, the external cooling unit 120 prevents a water level of the first cooling fluid W1 of the cooling unit 110 from being lowered due to the generated heat through heat exchange with the cooling unit 110.

The second cooling fluid W2 of the external receiving body 121 of the external cooling unit 120 allows the heat exchange to continuously occur without separate handling for a predetermined cycle. The predetermined cycle includes a cycle of at least 72 hours.

Here, the external cooling unit 120 is provided with the second cooling fluid W2 so as to correspond to a total heat equivalent generated by the small nuclear reactor 130 or the cooling unit 110.

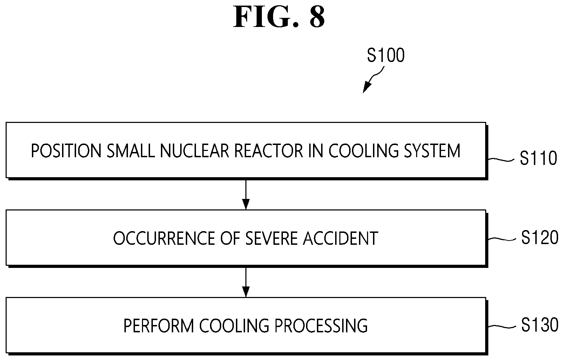

Referring to FIG. 8, in a small nuclear reactor cooling method (S100) according to an embodiment of the present disclosure, the small nuclear reactor 130 is positioned in the cooling system 100. In addition, when a severe accident occurs in the small nuclear reactor 130, cooling processing corresponding to the severe accident is performed in the cooling system 100.

The small nuclear reactor 130 is positioned in such a cooling system 100. The cooling system 100 includes the cooling unit 110 providing first cooling fluid W1 in response to the heat generated by the severe accident.

The embodiments of the present disclosure have been described hereinabove with reference to the accompanying drawings, but it will be understood by one of ordinary skill in the art to which the present disclosure pertains that various modifications and alterations may be made without departing from the technical spirit or essential feature of the present disclosure. Therefore, it is to be understood that the embodiments described above are illustrative rather than being restrictive in all aspects.

## Claims

1. A small nuclear reactor cooling system comprising:
a cooling unit in which a small nuclear reactor is positioned and which performs cooling processing corresponding to a severe accident in the cooling system when the severe accident occurs in the small nuclear reactor,
wherein the cooling unit provides a first cooling fluid so as to perform the cooling processing in response to heat generated by the severe accident.

2. The small nuclear reactor cooling system of claim 1, wherein the cooling unit includes a nuclear reactor receiving body and a passive cooling body,
the nuclear reactor receiving body includes a bottom panel portion forming a bottom, one side outer panel portion provided on one side of the bottom panel portion, and the other side outer panel portion provided on the other side of the bottom panel portion, and
the cooling unit is positioned around the small nuclear reactor between the one side outer panel portion and the other side outer panel portion and provides the first cooling fluid to the small nuclear reactor based on the heat generated by the severe accident.

3. The small nuclear reactor cooling system of claim 2, wherein the nuclear reactor receiving body further includes a plurality of inner panel portions provided between the one side outer panel portion and the other side outer panel portion,
the small nuclear reactors are positioned between the one side outer panel portion and the other side outer panel portion, and the inner panel portions, respectively, and
the passive cooling body is positioned on at least a portion of a peripheral portion of each of the small nuclear reactors and allows the first cooling fluid to be provided.

4. The small nuclear reactor cooling system of claim 3, wherein the passive cooling body includes:
a first passive cooling body provided on an inner side surface of the one side outer panel portion;
a second passive cooling body provided on an inner side surface of the other side outer panel portion;
third passive cooling bodies provided on at least portions of facing surfaces of the inner panel portions;
a fourth passive cooling body provided on at least a portion of a facing surface of the inner panel portion facing the first passive cooling body of the first outer panel portion; and
a fifth passive cooling body provided on at least a portion of a facing surface of the inner panel portion facing the second passive cooling body of the inner panel portion.

5. The small nuclear reactor cooling system of claim 4, wherein the cooling unit further includes an internal heat transfer body provided so that one side thereof is in contact with the passive cooling body and the other side thereof is in contact with the small nuclear reactor to link the passive cooling body and the small nuclear reactor with each other,
the internal heat transfer body transfers the heat generated by the severe accident of the small nuclear reactor to the passive cooling body, and
the passive cooling body receives the first cooling fluid therein and discharges the first cooling fluid to the outside in response to the heat transfer of the internal heat transfer body.

6. The small nuclear reactor cooling system of claim 5, wherein the internal heat transfer body includes any one of a needle-type structure, a bar-type structure, and a panel-type structure.

7. The small nuclear reactor cooling system of claim 5, wherein at least one of the first passive cooling body to the fifth passive cooling body is partitioned into a plurality of portions, and the first cooling fluid is contained in each of the plurality of portions.

8. The small nuclear reactor cooling system of claim 5, wherein the passive cooling body further includes a sixth passive cooling body provided on the bottom panel portion.

9. The small nuclear reactor cooling system of claim 2, further comprising:
an external cooling unit linked with the cooling unit; and
an external heat transfer body linking the cooling unit and the external cooling unit with each other,
wherein the external cooling unit includes:
an external receiving body filled with a second cooling fluid; and
a multilayer cooling body having a hollow structure, immersed in the second cooling fluid in the external receiving body, and bent in multiple layers.

10. The small nuclear reactor cooling system of claim 9, wherein the external cooling unit further includes a chimney-type cooling body linked with the multilayer cooling body to allow passive cooling processing based on a chimney effect to be performed on the small nuclear reactor.

11. The small nuclear reactor cooling system of claim 10, wherein the chimney-type cooling body includes:
an immersion-type cooling body having a hollow structure and immersed in the second cooling fluid in the external receiving body;
a first exposure-type cooling body having a hollow structure, connected to the immersion-type cooling body, and immersed in the second cooling fluid in the external receiving body, a portion of the first exposure-type cooling body in a height direction being exposed to the outside; and
a second exposure-type cooling body having a hollow structure, communicating with the first exposure-type cooling body through the immersion-type cooling body, and immersed in the second cooling fluid in the external receiving body, a portion of the second exposure-type cooling body in the height direction being exposed to the outside at a higher level than the first exposure-type cooling body.

12. The small nuclear reactor cooling system of claim 11, wherein the external heat transfer body links the first cooling fluid and the second cooling fluid with each other through the multilayer cooling body, and
the external cooling unit allows the passive cooling processing to be performed through a natural evaporation method in response to the heat generated by the small nuclear reactor.

13. The small nuclear reactor cooling system of claim 11, wherein the external cooling unit prevents a water level of the first cooling fluid of the cooling unit from being lowered due to the generated heat through heat exchange with the cooling unit, and
the second cooling fluid of the external receiving body allows the heat exchange to continuously occur without separate handling for a predetermined cycle.

14. The small nuclear reactor cooling system of claim 13, wherein the external cooling unit is provided with the second cooling fluid so as to correspond to a total heat equivalent generated by the small nuclear reactor or the cooling unit.

15. A small nuclear reactor cooling method comprising:
positioning a small nuclear reactor in a cooling system; and
performing cooling processing corresponding to a severe accident in the cooling system when the severe accident occurs in the small nuclear reactor,
wherein the small nuclear reactor is positioned in the cooling system, and
the cooling system includes a cooling unit providing a first cooling fluid in response to heat generated by the severe accident.
